# EUROPÄISCHE PATENTANMELDUNG

(11) **EP 3 974 671 A1**
(43) Veröffentlichungstag der Anmeldung: **30.03.2022**
(21) Anmeldenummer: 20198260.0
(22) Anmeldetag: 25.09.2020
(51) Int. Cl.: F16D 3/64

(54) **VERBESSERTE KUPPLUNG FÜR INDUSTRIE-APPLIKATIONEN UND SCHIENENFAHRZEUG**

(71) Anmelder: Flender GmbH, 46395 Bocholt (DE)
(72) Erfinder: Kleinewegen, Stefan, 46395 Bocholt (DE); te Uhle, Michael, 46414 Rhede (DE)
(74) Vertreter: Michalski Hüttermann & Partner Patentanwälte mbB

(57) **Zusammenfassung**

Die Erfindung betrifft eine Kupplung (10), die zumindest ein Klauenteil (12,14) und ein Zwischenstück (20) umfasst. Das Zwischenstück (20) weist ein Pufferteil (24) auf, das zur Aufnahme des zumindest einen Klauenteils (12,14) ausgebildet ist. Erfindungsgemäß ist das zumindest eine Pufferteil (24) in einem Endbereich (19) eines Rohrstücks (21) aufgenommen. Die Erfindung betrifft auch ein Drehgestell (65) für ein Schienenfahrzeug (60), das über eine derartige Kupplung (10) verfügt. Ebenso betrifft die Erfindung eine Industrie-Applikation (50), die über eine erfindungsgemäße Kupplung (10) verfügt. Ferner betrifft die Erfindung ein Computerprogrammprodukt (70), das dazu ausgebildet ist.

## Beschreibung

Die Erfindung betrifft eine Kupplung, die verbesserte Sicherheitseigenschaften aufweist und für der Einsatz in Industrie-Applikationen und Schienenfahrzeuge geeignet ist. Die Erfindung betrifft gleichermaßen eine entsprechende Industrie-Applikation und ein entsprechendes Drehgestell für ein Schienenfahrzeug. Ferner betrifft die Erfindung ein Computerprogrammprodukt, das zu einem Simulieren eines Betriebsverhaltens einer solchen Kupplung ausgebildet ist.

Aus dem Katalog "Elastische Klauenkupplungen ELKU-N", Kurzbezeichnung KWN 22013, Ausgabe 10/2015 der KWD Kupplungswerk Dresden GmbH ist eine elastische Klauenkupplung der Baureihe ELKU-N P bekannt. Diese umfasst einen Klauenring, der im montierten Zustand in ein Pufferteil eingreift. Das Pufferteil ist im Wesentlichen C-förmig ausgebildet und an einer Scheibe einer Bremstrommel angebracht.

Der Katalog "Antriebstechnik", Ausgabe 04/20 der KTR Systems GmbH ist eine doppelkardanische Wellenkupplung mit der Bezeichnung ROTEX SP ZS-DKM-C bekannt. Die Kupplung ROTEX SP ZS-DKM-C umfasst ein Zwischenstück, das beidseitig mit Klauenteilen versehen ist. Das Zwischenstück weist an seinen Enden korrespondierende Klauen auf. Zwischen dem Zwischenstück und den Klauenteilen sind jeweils im Wesentlichen sternförmige Dämpfungselemente angeordnet.

An Kupplungen werden steigende Anforderungen in puncto Drehmomentübertragung, Ausgleichsfähigkeit und Zuverlässigkeit gestellt. Insbesondere werden gute Notlaufeigenschaften angestrebt. Ebenso wird eine einfache und wirtschaftliche Herstellbarkeit gewünscht. Der Erfindung liegt die Aufgabenstellung zugrunde, eine Kupplung bereitzustellen, die in zumindest einem der beschriebenen Aspekte eine Verbesserung bietet.

Die Aufgabenstellung wird durch eine erfindungsgemäße Kupplung gelöst, die ein Zwischenstück und zumindest ein Klauenteil umfasst. Das Klauenteil weist eine Mehrzahl an Klauen auf, durch die Drehmoment auf das Zwischenstück oder vom Zwischenstück auf das Klauenteil übertragbar ist. Im Zwischenstück ist zumindest ein Pufferteil aufgenommen, in dem elastische Dämpfungselemente aufnehmbar sind. Die elastischen Dämpfungselemente sind im bestimmungsgemäßen Betrieb der Kupplung mit den Klauen in Kontakt und nehmen, bezogen auf eine Hauptdrehachse der Kupplung, eine Umfangskraft auf. Erfindungsgemäß umfasst das Zwischenstück neben dem zumindest einen Pufferteil auch ein Rohrstück. Das Rohrstück ist im Wesentlichen zylindrisch ausgebildet und dazu ausgelegt, dass durch das zumindest eine Pufferteil geleitete Drehmoment zu übertragen. Das zumindest eine Pufferteil ist erfindungsgemäß in einem Endbereich des Rohrstücks aufgenommen. Dabei ist das zumindest eine Pufferteil im Wesentlichen vom Rohrstück umschlossen. Die elastischen Dämpfungselemente des Pufferteils sind somit, bezogen auf die Hauptdrehachse der Kupplung, radial innerhalb einer Wandung des Rohrstücks positioniert. Die elastischen Dämpfungselemente werden so bei der Montage im Wesentlichen umschlossen. Bei einem Versagen der elastischen Dämpfungselemente wird ein Wegschleudern dieser verhindert. Die beim Versagen entstehenden Bruchstücke der elastischen Dämpfungselemente werden folglich festgehalten und bieten noch eine verringerte Dämpfungswirkung für einen Notlauf der Kupplung, der durch das Versagen einsetzt. Infolgedessen weist die erfindungsgemäße Kupplung auch bei ungewollten Betriebszuständen verbesserte Notlaufeigenschaften auf, durch die weitergehende Beschädigungen vermieden werden können. Ferner wird das Zwischenstück mit dem Klauenteil in einem sicheren Eingriff gehalten, also ein Wegschleudern des Zwischenstücks, verhindert. Dadurch wird die Betriebssicherheit, beispielweise einer Industrie-Applikation oder eines Drehgestells eines Schienenfahrzeugs, gesteigert. Ebenso wird ein Herausschleudern des Zwischenstücks in einem ungewollten Betriebszustand verhindert.

In einer Ausführungsform der beanspruchten Kupplung weist das Pufferteil, in einem Längsschnitt entlang der Hauptdrehachse betrachtet, ein Profil auf, das im Wesentlichen C-förmig oder J-förmig ausgebildet ist. Ein C-förmiges Profil erlaubt es, die elastischen Dämpfungselemente von drei Seiten zu umschließen und ein Wegschleudern oder Herausfallen von Bruchstücken der Dämpfungselemente zu verhindern. Das c-förmige Profil verleiht dem Pufferteil eine erhöhte Steifigkeit. Das C-förmige Profil ist konstruktiv in einfacher Weise axial verlängerbar, also vertiefbar. Dadurch sind Dämpfungselemente, die erhöhte axiale Abmessung aufweisen, im Zwischenstück aufnehmbar und gleichzeitig die axialen Abmessungen der Kupplung beibehaltbar. Ein C-förmiges Profil für das Pufferteil ist in einfacher Weise herstellbar. Ferner sind derartige Pufferteile kompakt und sind in einfacher Weise unabhängig von anderen Komponenten der Kupplung herstellbar. Die Fertigung der beanspruchten Kupplung wird dadurch flexibler, und somit kosteneffizienter. Alternativ kann das Pufferteil im Längsschnitt betrachtet auch ein im Wesentlichen J-förmiges Profil aufweisen. Bei einem J-förmigen Profil ist eine umlaufende Wandung des Pufferteils in Axialrichtung kürzer als die andere umlaufende Wandung. Dadurch ist in einem radial inneren Bereich des Pufferteils Material einsparbar, was wiederum zu einer Gewichtsersparnis führt.

Das Rohrstück, das zum Zwischenstück gehört, kann in einer Ausführungsform der beanspruchten Kupplung aus Aluminium oder einer Aluminiumlegierung hergestellt sein. Die Verwendung von Aluminium bzw. Aluminiumlegierung erlaubt es, das Rohrstück bei reduziertem oder zumindest gleichbleibendem Gewicht gegenüber Stahl, mit einer erhöhten Wandstärke auszubilden. Ferner weisen Aluminium bzw. Aluminiumlegierungen eine erhöhte Zähigkeit auf. Dies wiederum führt zu einer erhöhten Torsionssteifigkeit des Rohrstücks. Die erhöhte Wandstärke führt auch zu, in absoluten Werten betrachtet, erhöhten Toleranzen, was es wiederum ermöglicht, die Fertigung des Rohrstücks in einfacher Weise durchzuführen. Insgesamt ist so eine beanspruchungsgerechte Auswahl an Werkstoffen für die Kupplung möglich. Alternativ oder ergänzend kann das zumindest eine Pufferteil aus einem Gussmaterial, beispielsweise Grauguss, hergestellt sein. Gussmaterial bietet eine erhöhte Druckfestigkeit, Verschleißbeständigkeit und Wirtschaftlichkeit. Auch dadurch wird das Prinzip der beanspruchungsgerechten Werkstoffauswahl weiter verwirklicht.

In einer weiteren Ausführungsform der beanspruchten Kupplung sind an beiden Endbereichen des Rohrstücks jeweils ein Pufferteil und ein Klauenteil angeordnet. Das Zwischenstück wird folglich beidseitig stabil gelagert. Bei einem Versagen eines oder mehrerer elastischer Dämpfungselemente ist sichergestellt, dass am entgegengesetzten Endbereich eine ausreichend ausgleichsfähige Kupplungsanordnung ausgebildet ist. Insbesondere wird verhindert, dass bei einem Versagen eines elastischen Dämpfungselements das Zwischenstück soweit ausgelenkt wird, dass dieses aus der Kupplung gelöst wird. Infolgedessen ist die beanspruchte Kupplung robust und zuverlässig.

Darüber hinaus kann das zumindest eine Pufferteil mit dem Rohrstück über eine Klebeverbindung verbunden sein. Die Klebeverbindung kann dabei an einer umlaufenden Außenfläche des Pufferteils ausgebildet sein, die im montierten Zustand im Wesentlichen an einer Innenwand des Rohrstücks anliegt. Je höher die axialen Abmessungen des zumindest einen Pufferteils sind, umso größer, und damit belastbarer, ist die Klebefläche, die mit dem Rohrstück ausbildbar ist. Eine Klebeverbindung erlaubt es, zwischen dem Pufferteil und dem Rohrstück eine Spielpassung auszubilden. Die Spielpassung kann dabei mit erhöhten Toleranzen gefertigt werden, da der so vorgegebene Klebespalt im montierten Zustand ohnehin mit Klebstoff gefüllt ist. Des Weiteren erfordern weder das Pufferteil noch das Rohrstück im Bereich der Klebverbindung eine aufwendig überarbeitete glatte Oberfläche. Vielmehr ist im Bereich der Klebverbindung bei der Herstellung eine raue Oberfläche beibehaltbar, die aufgrund ihrer Rauigkeit eine gesteigerte Klebwirkung bietet. Dementsprechend ist die beanspruchte Kupplung kosteneffizient herstellbar.

Des Weiteren kann durch das zumindest eine Pufferteil und das zugehörige Klauenteil ein Kupplungsgelenk ausgebildet sein. Das Kupplungsgelenk erlaubt es, zwischen dem Zwischenstück und dem entsprechenden Klauenteil einen Versatz auszugleichen. Der Versatz kann als Axialversatz, Winkelversatz, oder einer Kombination hieraus ausgebildet sein. Dazu sind die Klauen, das Pufferteil und/oder die elastischen Dämpfungselemente mit entsprechenden Spielräumen ausgebildet, die für den jeweiligen Versatz hinreichend Platz bieten. Bei Ausführungsformen, bei denen das Zwischenstück beidseitig mit derartigen Pufferteilen versehen ist, in die Klauenteile eingreifen, wird so eine Doppelgelenkkupplung verwirklicht. Aufgrund der zwei Gelenkebenen, also Kupplungsgelenke, wird so der für einen Versatz notwendige Ausgleich zwischen zwei Klauenteilen aufgeteilt. Die beiden Kupplungsgelenke werden selbsttätig jeweils beide nur um ein Minimum ausgelenkt. Infolgedessen wird der Verschleiß an der Kupplung durch den Versatz nur geringfügig gesteigert. Demensprechend bietet die beanspruchte Kupplung eine erhöhte Lebensdauer und Zuverlässigkeit.

Ferner kann zumindest eines der im Pufferteil angeordneten elastischen Dämpfungselemente durch Additive Fertigung hergestellt sein. Elastomere, die gute Dämpfungseigenschaften aufweisen, können in hinreichender Genauigkeit mittels Additiver Fertigung hergestellt werden und sind in einfacher Weise konstruktiv anpassbar. Ebenso können per Additiver Fertigung hergestellte elastische Dämpfungselemente mit Sensoren versehen sein. Die Sensoren können an einer Außenseite der elastischen Dämpfungselemente und/oder in ihrem Inneren ausgebildet sein. Die Sensoren können jeweils als Temperatursensoren, Drucksensoren, oder Verschleißsensoren ausgebildet sein. Hierdurch wird eine platzsparende gesteigerte Funktionsintegration erzielt. Alternativ oder ergänzend kann zumindest eines der elastischen Dämpfungselemente aus einem elektrisch isolierenden Werkstoff hergestellt sein. Dadurch ist in einfacher Weise eine elektrische Isolierung zwischen einem Klauenteil und dem Zwischenstück herstellbar.

In einer weiteren Ausführungsform der beanspruchten Kupplung kann zumindest eines der elastischen Dämpfungselemente separat montierbar und demontierbar ausgebildet sein. Beispielsweise können die elastischen Dämpfungselemente kraftschlüssig in das Pufferteil einsteckbar sein. Dazu kann das jeweilige elastische Dämpfungselement im Wesentlichen H-förmig oder kreuzförmig ausgebildet sein. Die elastischen Dämpfungselemente sind so entsprechend ihrem Verschleißzustand gezielt austauschbar. Der Wartungsaufwand, insbesondere ein Ersatzteilbedarf für die beanspruchte Kupplung, ist dadurch reduzierbar.

Die beanspruchte Kupplung kann am zumindest einen Pufferteil einen Kragen aufweisen, der als axialer Anschlag dient. Der Kragen stellt im Wesentlichen einen Bereich mit einem erhöhten Außendurchmesser dar, der nicht im Rohrstück aufnehmbar ist. Bei einer Montage des Pufferteils im Rohrstück wird dessen axiale Position durch den Kragen begrenzt. Zwischen einer Stirnseite des Rohrstücks und dem Kragen ist eine Klebeverbindung ausbildbar, die zusätzlich das Pufferteil gegen Verdrehen abstützt. Der Kragen kann umlaufend ausgebildet sein oder segmentweise unterbrochen. Der Kragen ist durch eine Bearbeitung auf einer Drehbank herstellbar und kann dementsprechend präzise ausgerichtet sein. Das Rohrstück und das Pufferteil können folglich ein einfacher Weise präzise zueinander ausgerichtet werden. Eine schiefstehende Ausrichtung des Pufferteils, die gesteigerten Verschleiß wie ein Versatz zwischen dem Pufferteil und dem entsprechenden Kupplungsteil hervorruft, wird so vermieden. Ein umlaufender Kragen bildet mit dem Rohrstück einen umlaufenden Spalt, an den eine Klebeverbindung ausbildbar ist, die eine zusätzliche Sicherung gegen Verdrehen des Pufferteils bietet. Ein segmentweise unterbrochener Kragen bietet eine weitere Gewichtsersparnis.

Darüber hinaus kann am zumindest einen Pufferteil ein Deckel angeordnet sein. Durch den Deckel wird ein Eintritt von Staub, Flüssigkeit oder Dämpfen in das Innere des Zwischenstücks verhindert. Insbesondere wird der Eintritt von Flüssigkeiten oder Dämpfen verhindert, die eine Klebverbindung zwischen dem zumindest einen Pufferteil und dem Rohrstück angreift. Die Lebensdauer des Zwischenstücks, und somit der Kupplung, wird dadurch erhöht. Durch diesen Schutz wird die Verwendung einer Klebverbindung im Zwischenstück technisch praktikabel, und somit deren technische Vorzüge nutzbar. Ferner kann ein solcher Deckel axial vorstehen und so als ein Anschlag für eine Welle und/oder ein Klauenteil dienen. Hierdurch wird eine Geräuschentkopplung zwischen dem Zwischenstück und der Welle bzw. dem Klauenteil erreicht und damit Geräuschentwicklung im Betrieb vermindert.

Die zugrundeliegende Aufgabenstellung wird auch durch eine erfindungsgemäße Industrie-Applikation gelöst. Die Industrie-Applikation umfasst eine Antriebseinheit, durch die eine Antriebsleistung bereitgestellt wird. Die Antriebseinheit kann als Elektromotor, Verbrennungsmotor, Hydraulikmotor, Turbinenrad oder Schwungrad ausgebildet sein. Die Antriebsleistung ist über eine Kupplung mit einer Abtriebseinheit verbunden, die eine mechanische Anwendung ist, durch die die Funktion der Industrie-Applikation bestimmt ist. Die Industrie-Applikation kann insgesamt als Mühle, Wälzmühle, Zementmühle, Zuckermühle, Extruder, Förderanlage, Gesteinsbrecher, Walzenbrecher, Rührwerk, Rührzerkleinerer, Drehrohrofen, Walzenpresse, Rollpresse, Pumpe, Ventilator, Hebevorrichtung, Schrottpresse oder Müllpresse ausgebildet sein. Die Kupplung ist dabei erfindungsgemäß nach einer der oben skizzierten Ausführungsformen ausgebildet.

Ebenso wird die eingangs beschriebene Aufgabe durch ein Drehgestell für ein Schienenfahrzeug gelöst, das einen Fahrmotor umfasst, der mit einem Rad drehmomentübertragend verbunden ist. Zwischen dem Rad und dem Fahrmotor kann ferner ein Getriebe angeordnet sein. Erfindungsgemäß weist das Drehgestell eine Kupplung auf, über die der Fahrmotor mit dem Rad verbunden ist. Die Kupplung ist dabei gemäß einer der oben dargestellten Ausführungsformen ausgebildet.

Gleichermaßen wird die skizzierte Aufgabenstellung durch ein erfindungsgemäßes Computerprogrammprodukt gelöst, das zu Simulation eines Betriebsverhaltes einer Kupplung ausgebildet ist, die in einer Industrie-Applikation oder einem Schienenfahrzeug eingesetzt wird. Unter dem Betriebsverhalten ist beispielweise ein Auslenkverhalten oder Verschleißverhalten einzelner Komponenten zu verstehen. Auch eine Kinematik und/oder eine Schwingungscharakteristik der Kupplung können mittels des Computerprogrammprodukts simuliert werden. Das Betriebsverhalten der Kupplung ist dadurch in einem montierten Zustand in der Industrie-Applikation oder dem Schienenfahrzeug simulierbar. Dies kann sowohl einen Produktivbetrieb als auch einen Wartungsbetrieb umfassen. Die Kupplung ist dementsprechend in ihrem physikalischen Verhalten im erfindungsgemäßen Computerprogrammprodukt abgebildet und kann mit einer Datenschnittstelle versehen sein, durch die weitere simulationsgerichtete Computerprogrammprodukte Eingabewerte an das erfindungsgemäße Computerprogrammprodukt weitergeben können. Gleichermaßen kann das Computerprogrammprodukt auch mit einer Datenschnittstelle zu einem Weitergeben von Ausgabewerten des erfindungsgemäßen Computerprogrammprodukts an weitere simulationsgerichtete Computerprogrammprodukte versehen sein. Das Computerprogrammprodukt kann als sogenannter Digitaler Zwilling ausgebildet sein. Derartige Digitalen Zwillinge sind beispielsweise in der Offenlegungsschrift US 2017/286572 A1 dargestellt. Der Offenbarungsgehalt von US 2017/286572 A1 wird durch Verweisung in die vorliegende Anmeldung mit einbezogen. Erfindungsgemäß ist die Kupplung, die durch das beanspruchte Computerprogrammprodukt simulierbar ist, gemäß einer der oben skizzierten Ausführungsformen ausgebildet.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Kupplung in einer Schnittdarstellung;
- FIG 2: einen Aufbau einer Ausführungsform eines beanspruchten Drehgestells;
- FIG 3: einen Aufbau einer Ausführungsform einer beanspruchten Industrie-Applikation.

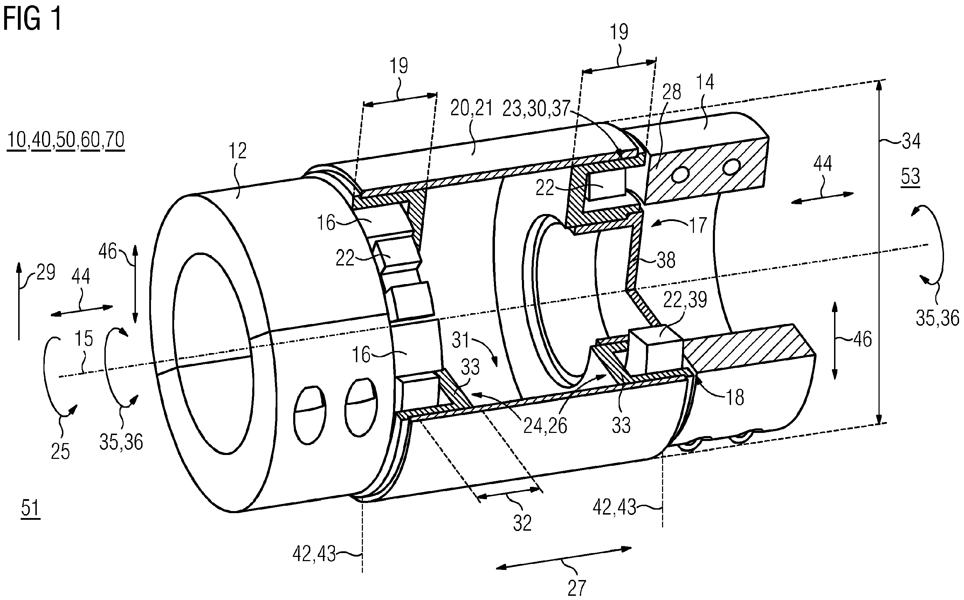

Eine Schnittdarstellung einer ersten Ausführungsform einer beanspruchten Kupplung 10 ist in FIG 1 abgebildet. Die Kupplung 10 umfasst ein erstes Kupplungsteil 12 und ein zweites Kupplungsteil 14, die mit einem Zwischenstück 20 verbunden sind. Die Klauenteile 12, 14 weisen jeweils eine Mehrzahl an Klauen 16 auf, die in das Zwischenstück 20 eingreifen. Eine Drehung des ersten Klauenteils 12 um eine Hauptdrehachse 15 der Kupplung 10 wird Drehmoment 25 auf das Zwischenstück 20, und von dort auf das zweite Kupplungsteil 14 übertragen. Das Drehmoment 25 wird durch eine nicht näher dargestellte erste Leistungswelle 51 zugeführt und über eine nicht näher gezeigte zweite Leistungswelle 53 abgeführt. Das Zwischenstück 20 umfasst ein Rohrstück 21, das in seinen Endbereichen 19 jeweils mit einem Pufferteil 24 versehen ist. Zumindest eines der Pufferteile 24 ist aus einem Gussmaterial, insbesondere Grauguss, hergestellt. Das Rohrstück 21 ist aus Aluminium oder einer Aluminiumlegierung hergestellt und weist einen Außendurchmesser auf, der den größten Außendurchmesser 34 der Kupplung 10 definiert.

Die Pufferteile 24 in den Endbereichen 19 des Rohrstücks 21 weisen im Längsschnitt betrachtet ein im Wesentlichen C-förmiges Profil 26 auf. Jeweils eine Außenfläche 23 der Pufferteile 24 liegt an einer Innenwand 31 des Rohrstücks 21 an und ist mit dem Rohrstück 21 über eine Klebverbindung 30 verbunden. Das Rohrstück 21 und die Pufferteile 24 sind jeweils derart ausgebildet, dass zwischen diesen in einem unverklebten Zustand ein Klebspalt 37 ausgebildet ist. Im Bereich des Klebspalts 37 weisen die Außenfläche 23 des Pufferteils 24 und das Rohrstück 21 eine erhöhte Rauigkeit auf, um so die Beanspruchbarkeit des Klebespalts 37 zu steigern. Eine Klebespaltlänge 32 zwischen dem jeweiligen Pufferteil 24 und dem Rohrstück 21 ist durch eine Abmessung des entsprechenden Pufferteils 24 in Axialrichtung 27 definiert. Je höher die Klebespaltlänge 32 ist, umso höher ist die mechanische Beanspruchbarkeit der Klebeverbindung 30. Die Pufferteile 24 weisen ferner jeweils einen Kragen 28 auf, der einen Anschlag ausbildet und so die Position der Pufferteile 24 im Rohrstück 21 in Axialrichtung 27 begrenzt. Durch die Krägen 28 wird jeweils eine räumliche Ausrichtung der Pufferteile 24 gewährleistet. In den Pufferteile 24 ist jeweils eine Mehrzahl an elastischen Dämpfungselementen 22 angeordnet, die im bestimmungsgemäßen Betrieb der Kupplung 10 Tangentialkräfte 17 auf die Klauen 16 ausüben oder auf die durch die Klauen 16 Tangentialkräfte 17 ausgeübt werden. Die elastischen Dämpfungselemente 22 sind über Haltevorsprünge 33 kraftschlüssig und/oder formschlüssig am jeweiligen Pufferteil 24 befestigt. Über die Tangentialkräfte 17 werden im jeweiligen Pufferteil 24 Druckbeanspruchungen hervorgerufen. Zumindest eines der elastischen Dämpfungselemente 22 ist mittels Additiver Fertigung hergestellt und mit einem nicht näher dargestellten Sensor 39 ausgestattet. Der Sensor 39 ist dabei im Inneren des elastischen Dämpfungselements 22 positioniert.

Die elastischen Dämpfungselemente 22 sind von drei Seiten vom jeweiligen Pufferteil 24 umschlossen. Dadurch sind die elastischen Dämpfungselemente 22 jeweils separat montierbar und demontierbar. Auf einer dem Rohrstück 21 abgewandten Seite des jeweiligen Pufferteils 24, also dessen offener Seite, ist jeweils ein Klauenteil angeordnet. Dadurch sind die elastischen Dämpfungselemente 22 im Wesentlichen eingeschlossen. Bei einem Versagen eines elastischen Dämpfungselements 22 zerfällt dieses in Bruchstücke, die dadurch, dass sie eingeschlossen sind, immer noch einen Notlaufbetrieb der Kupplung 10 ermöglichen. Die Pufferteile 24, die Klauen 16 und die elastischen Dämpfungselemente 24 sind derart dimensioniert, dass zwischen dem ersten bzw. zweiten Klauenteil 12, 14 und dem Zwischenstück 20 ein Spalt 18 vorliegt, der umlaufend ausgebildet ist. Daraus ergibt sich am ersten und zweiten Klauenteil 12, 14 eine Gelenkebene 42 gegenüber dem Zwischenstück 20. Jede der Gelenkebenen 42 entspricht einem Gelenk 43 erlaubt es, einen Winkelversatz 36 auszugleichen, der durch eine Kippbewegung 35 hergerufen wird. Ferner ist zwischen dem Zwischenstück 20 und dem ersten bzw. zweiten Klauenteil 12, 14 auch ein Axialversatz 44 und/oder Radialversatz 56 ausgleichbar. Die Kupplung 10 stellt dadurch eine Doppelgelenckupplung 40 dar. Die Kupplung 10 ist ferner in einem Computerprogrammprodukt 70 abgebildet, das dazu ausgebildet ist, das Betriebsverhalten der Kupplung 10 zu simulieren, beispielsweise in einer Industrie-Applikation 50 oder einem Schienenfahrzeug 60.

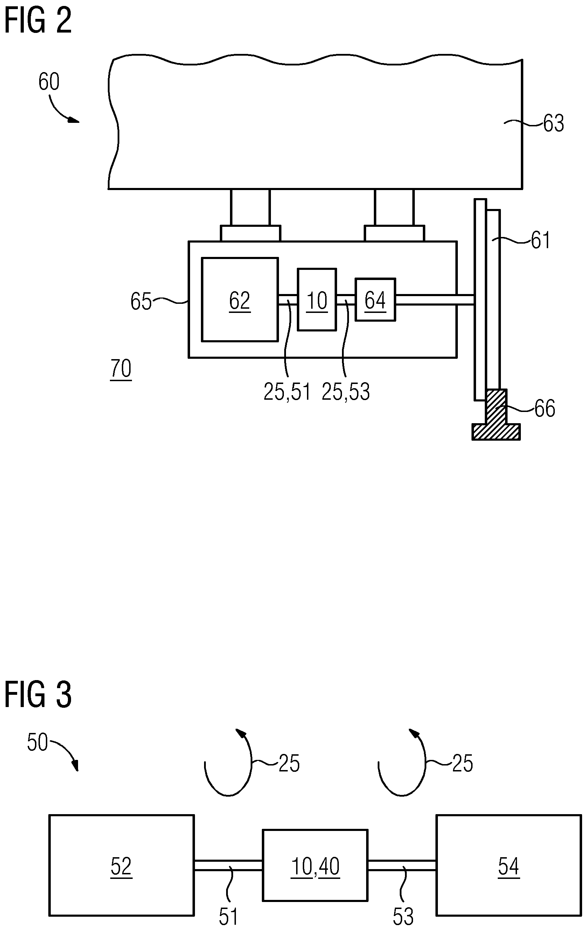

FIG 2 zeigt einen schematischen Aufbau einer Ausführungsform eines beanspruchten Drehgestells 65, das in einem Schienenfahrzeug 60 eingesetzt wird. Das Schienenfahrzeug 60 umfasst einen Wagenkasten 63, an dem das Drehgestell 65 befestigt ist. Das Drehgestellt 65 umfasst einen Fahrmotor 62, der über eine Kupplung 10 mit einem Getriebe 64 verbunden ist, um ein Rad 61 anzutreiben, dass auf einer Schiene 66 rollt. Dazu ist die Kupplung 10 mit einer ersten Leistungswelle 51 wird der Kupplung 10 Drehmoment 25 zugeführt und über eine zweite Leistungswelle 53 wird das Drehmoment 25 abgeführt. Die Kupplung 10 ist gemäß einer der oben skizzierten Ausführungsformen ausgebildet, beispielsweise gemäß der Doppelgelenkkupplung 40 nach FIG 1. Die Kupplung 10 ist dabei in einem Computerprogrammprodukt 70 abgebildet, mit dem das Betriebsverhalten der Kupplung 10 im Betrieb des Drehgestells 65, und damit des Schienenfahrzeugs 60, simulierbar ist.

In FIG 3 ist schematisch ein Aufbau einer Ausführungsform einer beanspruchten Industrie-Applikation 50 dargestellt. Die Industrie-Applikation 50 umfasst eine Antriebseinheit 52, die als Elektromotor, Verbrennungsmotor, Hydraulikmotor, Turbinenrad oder Schwungrad ausgebildet sein kann. Durch die Antriebseinheit 52 wird Drehmoment 25 zur Verfügung gestellt, das über eine erste Leistungswelle 51 einer Kupplung 10 zugeführt wird. Das Drehmoment 25 wird von der Kupplung 10 über eine zweite Leistungswelle 53 an eine Abtriebseinheit 54 weitergeleitet. Die Abtriebseinheit 54 ist eine mechanische Anwendung, durch die die Funktion der Industrie-Applikation 50 bestimmt ist. Die Industrie-Applikation 50 kann insgesamt als Mühle, Wälzmühle, Zementmühle, Zuckermühle, Extruder, Förderanlage, Gesteinsbrecher, Walzenbrecher, Rührwerk, Rührzerkleinerer, Drehrohrofen, Walzenpresse, Rollpresse, Pumpe, Ventilator, Hebevorrichtung, Schrottpresse oder Müllpresse ausgebildet sein. Dabei ist die Kupplung 10 nach einer der oben skizzierten Ausführungsformen ausgebildet, beispielsweise als Doppelgelenkkupplung 40 gemäß FIG 1.

## Patentansprüche

1. Kupplung (10), umfassend zumindest ein Klauenteil (12, 14) und ein Zwischenstück (20), das ein Pufferteil (24) zur Aufnahme des zumindest einen Klauenteils (12,14) aufweist, **dadurch gekennzeichnet , dass** das zumindest eine Pufferteil (24) in einem Endbereich (19) eines Rohrstücks (21) aufgenommen ist.

2. Kupplung (10) nach Anspruch 1, **dadurch ge** - **kennzeichnet,** dass das zumindest eine Pufferteil (24) im Längsschnitt ein C-förmiges oder J-förmiges Profil (26) aufweist.

3. Kupplung (10) nach Anspruch 1 oder 2, **dadurch gekennzeichnet , dass** das Rohrstück (21) aus Aluminium oder einer Aluminiumlegierung hergestellt ist.

4. Kupplung (10) nach einem der Ansprüche 1 bis 3, **da** - **durch gekennzeichnet** , dass an beiden Endbereichen (19) des Rohrstücks (21) jeweils ein Pufferteil (24) und ein Klauenteil (12, 14) angeordnet sind.

5. Kupplung (10) nach einem der Ansprüche 1 bis 4, **da** - **durch gekennzeichnet** , dass das zumindest eine Pufferteil (24) mit dem Rohrstück (21) über eine Klebeverbindung (30) verbunden ist.

6. Kupplung (10) nach einem der Ansprüche 1 bis 5, **da** - **durch gekennzeichnet** , dass durch das zumindest eine Pufferteil (24) und das zugehörige Klauenteil (12, 14) ein Kupplungsgelenk (43) ausgebildet ist.

7. Kupplung (10) nach einem der Ansprüche 1 bis 6, **da** - **durch gekennzeichnet** , dass zumindest eines der im Pufferteil (24) angeordneten elastischen Dämpfungselemente (22) mittels Additiver Fertigung hergestellt ist.

8. Kupplung (10) nach Anspruch 7, **dadurch ge** - **kennzeichnet**, dass das die elastischen Dämpfungselement (22) separat montierbar und demontierbar sind.

9. Kupplung (10) nach einem der Ansprüche 1 bis 8, **da** - **durch gekennzeichnet** , dass am zumindest einen Pufferteil (24) ein umlaufender Kragen (28) als axialer Anschlag ausgebildet ist.

10. Kupplung (10) nach einem der Ansprüche 1 bis 9, **da** - **durch gekennzeichnet**, dass am zumindest einen Pufferteil (24) ein Deckel (38) angeordnet ist.

11. Industrie-Applikation (50), umfassend eine Antriebseinheit (52) und eine Abtriebseinheit (54), die drehmomentübertragend mit einer Kupplung (10) verbunden sind, **dadurch gekennzeichnet , dass** die Kupplung (10) nach einem der Ansprüche 1 bis 10 ausgebildet ist.

12. Drehgestell (65) für ein Schienenfahrzeug (60), umfassend einen Fahrmotor (62) und ein Rad (61), die über eine Kupplung (10) drehmomentübertragend miteinander verbunden sind, **da** - **durch gekennzeichnet**, dass die Kupplung (10) nach einem der Ansprüche 1 bis 10 ausgebildet ist.

13. Computerprogrammprodukt (70) zum Simulieren eines Betriebsverhaltens einer Kupplung (10), die in einer Industrie-Applikation (50) oder einem Drehgestell (65) ausgebildet ist, **dadurch gekennzeichnet, dass** die Kupplung (10) nach einem der Ansprüche 1 bis 10 ausgebildet ist.
